# EUROPÄISCHE PATENTSCHRIFT

(11) **EP 1 277 981 B1**
(45) Veröffentlichungstag und Bekanntmachung des Hinweises auf die Patenterteilung: **19.12.2007**
(21) Anmeldenummer: 02011698.4
(22) Anmeldetag: 04.06.2002
(51) Int. Cl.: F16D 23/06

(54) **Gesinterter Schaltmuffenträger**
Sintered gear shift sleeve
Manchon de commande fritté

(30) Priorität: 21.07.2001 DE 10135639
(43) Veröffentlichungstag der Anmeldung: 22.01.2003
(73) Patentinhaber: Bayerische Motoren Werke Aktiengesellschaft, 80809 München (DE)
(72) Erfinder: Rastinger, Bernhard, 81249 München (DE)

(56) Entgegenhaltungen:
- EP-A- 1 184 585
- DE-C- 19 922 325
- DE-U- 7 042 040
- FR-A- 2 752 279
- GEMEINHOLZER G: "ZF: CONFORT DE PASSAGE ET CONSTRUCTION PLUS COMPACTE POUR LES TRANSMISSIONS DE VOITURES DE SPORT ET DE PUISSANCES ELEVEES, GRACE AU MATERIAU DE FRICTION FRITTE HS 43" INGENIEURS DE L'AUTOMOBILE, RAIP. BOULOGNE, FR, Nr. 662, 1991, Seiten 69-71, XP000147163 ISSN: 0020-1200

## Beschreibung

Die Erfindung betrifft einen gesinterten Schaltmuffenträger gemäß dem Oberbegriff des Patentanspruches 1.

Ein derartiger Schaltmuffenträger ist aus der DE 70 42 040 U bekannt.

Aus der DE 199 22 325 C1 ist ein aus Sintermetall hergestellter Schaltmuffenträger bekannt, bei dem die Aufnahmen für die Vorsynchrondruckfedern durch ein gesondertes Bodenteil gebildet sind, das in einen Durchgang des Schaltmuffenträgers eingesetzt ist. Der mehrteilige Aufbau des Schaltmuffenträgers verteuert diesen aufgrund von dadurch notwendig werdenden Montagevorgängen.

Deshalb ist es Aufgabe der Erfindung einen gesinterten Schaltmuffenträger bereitzustellen, der einteilig aufgebaut ist und keinerlei mechanischer Bearbeitung zur Herstellung der Auflager für die Vorsynchrondruckfedern bedarf.

Die Aufgabe wird erfindungsgemäß mit den Merkmalen des Anspruchs 1 gelöst. Weitere Ausgestaltungen der Erfindung ergeben sich aus dem Unteranspruch.

Nach der Erfindung ist ein gesinterter Schaltmuffenträger mit Auflagern für Vorsynchrondruckfedern zu deren Führung in axialer und radialer Richtung wobei jedes Vorsynchrondruckfederauflager aus jeweils einem im Sinterverfahren gleichzeitig mit dem Schaltmuffenträger hergestellten Zentriervorsprung des Schaltmuffenträgers in radialer Richtung besteht, der die zugehörige Vorsynchrondruckfeder an ihrem Innendurchmesser zentriert.

Das hat den Vorteil, dass der gesinterte Schaltmuffenträger zur Herstellung der Auflager für die Vorsynchrondruckfedern nicht mechanisch bearbeitet werden muss. Außerdem schwächen keine Bohrungen oder Ausnehmungen den Querschnitt des Schaltmuffenträgers, was das übertragbare Moment, das über den Schaltmuffenträger geleitet werden kann, reduziert. Außerdem ist der Herstellaufwand verringert. Ein Schaltmuffenträger gemäß der Erfindung besitzt vorteilhafterweise keine Einlegeteile

Eine vorteilhafte Ausführung der Erfindung sieht vor, dass die Trennebene des Sinterwerkzeugs mittig durch den Zentriervorsprung des Schaltmuffenträgers verläuft. Dadurch ist eine Herstellung ohne nachträgliche Bearbeitung möglich. Dies führt zu einer Kostenreduzierung und das übertragbare Moment wird gesteigert.

Die Erfindung sieht außerden vor, dass der Zentriervorsprung eine Hinterschneidung besitzt, die so gestaltet ist, dass die Vorsynchrondruckfeder mit einem Gang in diese eingerastet ist.

Das hat den Vorteil, dass die Vorsynchrondruckfeder in radialer Richtung optimal fixiert ist. Die Teile können verliersicher, zum Beispiel durch Automaten, vormontiert werden und die Masse der Vorsynchrondruckfeder wird bezüglich Fliehkraftwirkung abgekoppelt. Dadurch wird der Masseneinfluss auf die Schaltkraft bei unterschiedlichen Drehzahlen minimiert.

Ein bevorzugte Ausführungsbeispieil der Erfindung beschreibt die nachfolgende Beschreibung mit der zugehörigen Zeichnung. Es zeigen
- Figur 1: einen Teilquerschnitt eines nicht erfindungsgemäßen gesinterten Schaltmuffenträgers im Bereich einer Vorsynchrondruckfeder und
- Figur 2: eine erfindungsgemäße Variante nach Figur 1 in entsprechender Darstellung.

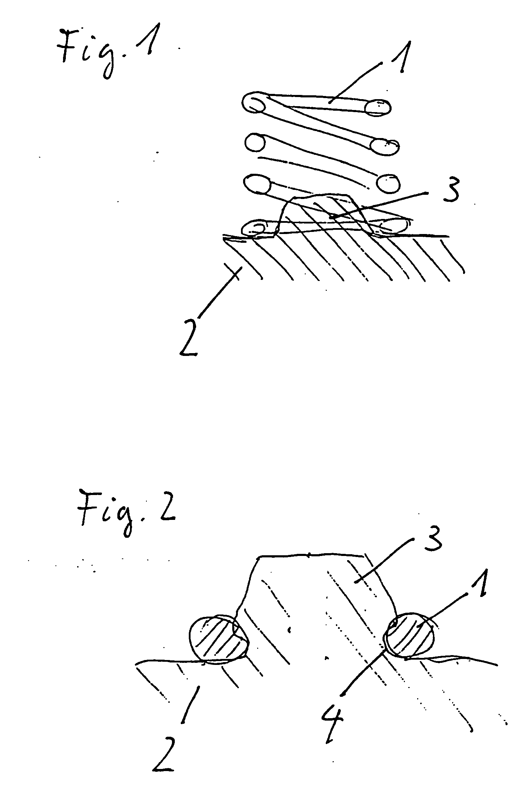

**Figur 1** zeigt eine Vorsynchrondruckfeder 1 und deren Auflager auf einem gesinterten Schaltmuffenträger 2 an deren radial nach innen gerichtetem Ende. Zur Bildung des Auflagers besitzt der gesinterte Schaltmuffenträger 2 einen nockenartigen Vorsprung 3, einstückig mit dem gesinterten Schaltmuffenträger ausgebildet, der sich in die Vorsynchrondruckfeder 1 hineinerstreckt und diese an ihrem Innendurchmesser in radialer und axialer Richtung fixiert. Die Trennebene des Sinterwerkzeugs verläuft, damit eine Herstellung ohne nachträgliche Bearbeitung möglich ist, in der Zeichenebene.

**Figur 2** zeigt eine zusätzliche Modifizierung der Ausführung nach Figur 1, bei der die Vorsynchrondruckfeder 1 in radialer Richtung besser fixiert wird. Der nockenartige Vorsprung 3 besitzt dazu eine aus dem Sinterwerkzeug entformbare Hinterschneidung 4 am Nockengrund, in die die Vorsynchrondruckfeder 1 mit ihrem ersten Gang verrastet ist. Dadurch kann die Vorsynchrondruckfeder 1 am gesinterten Schaltmuffenträger 2 verliersicher vormontiert werden. Außerdem wird bei richtiger Auslegung die Masse der Vorsynchrondruckfeder bezüglich der Fliehkraftwirkung abgekoppelt, wodurch der Masseneinfluss auf die Schaltkraft bei unterschiedlichen Drehzahlen minimiert wird.

## Patentansprüche

1. Gesinterter Schaltmuffenträger (2) mit Vorsynchrondruckfedern und mit Auflagern, die jeweils dazu vorgesehen sind, eine Vorsynchrondruckfeder (1) in axialer und radialer Richtung zu führen, wobei jedes Auflager aus jeweils einem im Sinterverfahren gleichzeitig mit dem Schaltmuffenträger (2) hergestellten Zentriervorsprung (3) des Schaltmuffenträgers (2) in radialer Richtung besteht, der dazu vorgesehen ist, eine Vorsynchrondruckfeder (1) an ihrem Innendurchmesser zu zentrieren, **dadurch gekennzeichnet, dass** jeder Zentriervorsprung (3) eine Hinterschneidung (4) aufweist, in die eine Vorsynchrondruckfeder (1) eingerastet ist.

2. Schaltmuffenträger (2) nach Anspruch 1, **dadurch gekennzeichnet, dass** die Trennebene des Sinterwerkzeugs mittig durch den Zentriervorsprung (3) des Schaltmuffenträgers (2) verläuft.

## Claims

1. A sintered switching coupling holder (2) comprising presynchronising pressure springs and bearings adapted to guide a presynchronising pressure spring (1) in the axial and radial direction, wherein each bearing comprises a projection (3) for sintering the switching coupling holder (2) in the radial direction and produced simultaneously with the switching coupling holder (2) in the sintering process and adapted to centre a presynchronising pressure spring (1) along its inner diameter, **characterised in that** each centring projection (3) has an undercut (4) in which the presynchronising pressure spring (1) engages.

2. A switching coupling holder (2) according to claim 1, **characterised in that** the parting plane of the sintering tool runs centrally through the projection (3) for centring the switching coupling holder (2).

## Revendications

1. Manchon de commutation (2) avec des ressorts de compression de pré-synchronisation et des appuis prévus respectivement pour guider un ressort de compression de synchronisation (1) dans la direction axiale et la direction radiale et chacun des appuis est formé respectivement d'un bossage de centrage (3) du support de manchon de commutation (2), dans la direction radiale, réalisé par frittage en même temps que le support de manchon de commutation (2), ce bossage étant prévu pour cintrer un ressort de compression de pré-synchronisation (1) par son diamètre intérieur,
**caractérisé en ce que**
chaque saillie de centrage (3) comporte une partie en contre-dépouille (4) dans laquelle s'accroche un ressort de compression de pré-synchronisation (1).

2. Support de manchon de commutation (2) selon la revendication 1,
**caractérisé en ce que**
le plan de séparation de l'outil de frittage passe par le milieu de la saillie de centrage (3) du support de manchon de commutation (2).
